# EUROPÄISCHE PATENTANMELDUNG

(11) **EP 3 786 813 A1**
(43) Veröffentlichungstag der Anmeldung: **03.03.2021**
(21) Anmeldenummer: 20199755.8
(22) Anmeldetag: 24.04.2020
(51) Int. Cl.: G06F 16/9032, G06F 9/445

(54) **VORRICHTUNG ZUM NUTZERABHÄNGIGEN BETREIBEN ZUMINDEST EINES DATENVERARBEITUNGSSYSTEMS**

(30) Priorität: 24.04.2019 DE 102019110546
(62) Teilanmeldung aus: 20723046.7
(71) Anmelder: B-Horizon GmbH, 93161 Sinzing (DE)
(72) Erfinder: Kabany, Mohammad, 93053 Regensburg (DE)
(74) Vertreter: Peters, Andreas

(57) **Zusammenfassung**

Die Erfindung betrifft eine Vorrichtung zum Betreiben eines Datenverarbeitungssystems,
- Bereitstellen von zumindest zwei Datenrechnern, wobei beide Datenrechner in Datenkommunikation miteinander stehen oder diese eine solche miteinander aufbauen können,
- Eingabe von Betriebsparametern in zumindest einen Datenrechner zum Betreiben der Datenrechner und/oder zum Betreiben des Datenverarbeitungssystems,
- Adressierung zumindest eines Datenrechners durch spezifische Eingabe von Adressdaten,
- Aufbau einer HTML-basierten Kommunikationsverbindung zwischen den Datenrechnern, wobei nach Aufbau der Kommunikationsverbindung Daten von einem Datenrechner auf zumindest einen anderen Datenrechner übertragen werden, wobei
- die beiden Datenrechner ein vollständig unabhängiges und, vorzugsweise in sich datentechnisch abgeschlossenes, Datensystem, derart bildet als dass der Aufbau der Kommunikationsverbindung sowie ein Betreiben der Kommunikationsverbindung zwischen den Datenrechnern ausschließlich auf Basis einer Datenkommunikation der Datenrechner untereinander beruht.

## Beschreibung

Die vorliegende Erfindung betrifft eine Vorrichtung zum nutzerabhängigen Betreiben zumindest eines Datenverarbeitungssystems gemäß dem Oberbegriff des Patentanspruchs 1.

Die hier beschriebene Vorrichtung zum nutzerabhängigen Betreiben zumindest eines Datenverarbeitungssystems umfasst in einem ersten Schritt ein Bereitstellen zumindest einer ersten Rechnereinheit, welche auf Basis von in einer Datenbank hinterlegten Nutzerdaten eines Nutzers zumindest ein dem Nutzer eindeutig zugeordnetes Nutzerprofil von Nutzungsobjekten des Nutzers erzeugt und/oder abruft.

Im Sinne der vorliegenden Erfindung handelt es sich bei dem Nutzerprofil um eine in einer Systemadministration hinterlegte Konfiguration eines Benutzerkontos eines Betriebssystems. Ein Nutzerprofil kann verschiedene Rechte umfassen, zum Beispiel Leserechte, Schreibrechte, Verbindungen, Installation von Programmen und Löschrechte. Diese Rechte werden vom jeweiligen Systemadministrator im Rahmen der Benutzerverwaltung vergeben und können durch jeden anderen Systemadministrator geändert werden. Bei den Administratoren kann es sich um einen oder verschiedene Nutzer handeln. Der Administrator hat dagegen lediglich ein privilegiertes Benutzerprofil. Um Datenschutz zu gewährleisten, können die Nutzerprofile Anderer grundsätzlich beschränkt werden.

Im Nutzerprofil werden vorzugsweise außerdem eigene Dateien und Einstellungen des jeweiligen Benutzers gespeichert. Dazu gehören auch Konfigurationsdateien von Programmen.

Besonders sensible Daten des Nutzers können zusätzlich gesichert sein, wie etwa in einem Root Account oder einem geschützten Speicher.

Bei der ersten Recheneinheit kann es sich um einen Computer, ein Notebook oder um einen sonstigen Rechnerchip handeln.

In einem zweiten Schritt wird eine zweite Rechnereinheit bereitgestellt, welche dem Nutzer zumindest einen Nutzungsvorschlag zur zukünftigen Nutzung eines Nutzungsobjekts macht, wobei der Nutzer den Nutzungsvorschlag bestätigen, verändern und/oder ablehnen kann und weiter wobei im Falle einer Veränderung und/ oder eine Ablehnung des Nutzungsvorschlags durch den Nutzer die zweite Recheneinheit das Nutzerprofil an dann veränderte Nutzerdaten anpasst.

Eine derartige Anpassung kann darin bestehen, dass Nutzungsdaten, welche eindeutig, vorzugsweise eineindeutig mit einem entsprechenden Nutzungsobjekt verbunden sind, in dem Nutzerprofil entsprechend verändert werden, um ein verändertes Nutzungsverhalten der einzelnen Nutzungsobjekte wiederspiegeln zu können.

In einem dritten Schritt wird eine dritte Rechnereinheit bereitgestellt, welche die dann von der ersten Rechnereinheit übermittelten Nutzerdaten empfängt, wobei die Nutzerdaten Steuerungs- und/ oder Regelungsdaten sind, mittels derer zumindest ein Nutzungsobjekt gesteuert und/ oder geregelt wird.

Die vorliegende Erfindung ist daher in zumindest drei Schritte unterteilt. Ein erster Schritt ist durch die von der ersten Rechnereinheit durchgeführte Operation bezeichnet und kann als eine Lernphase des Datenverarbeitungssystems bezeichnet werden.

Ein zweiter Schritt ist durch das Bereitstellen der zweiten Rechnereinheit definiert, welche als eine Korrekturphase des Datenverarbeitungssystems bezeichnet werden kann, wobei eine dritte Lernphase eine Implementationsphase darstellt, welche durch das Bereitstellen der dritten Rechnereinheit repräsentiert ist.

Gemäß zumindest einer Ausführungsform wird von der zweiten und/oder der dritten Rechnereinheit eine Treffsicherheit errechnet, wobei die Treffsicherheit ein zahlenmäßiges Verhältnis, insbesondere ein dezimaler Bruch von vorgeschlagenen Nutzungsparametern zu tatsächlich vom Benutzer ausgewählten Nutzungsparametern ist und erst ab Unter- oder Überschreitung eines Treffsicherheitsschwellwertes die Nutzerdaten an eine dritte Rechnereinheit übermittelt werden. Bei der Treffsicherheit kann es sich damit oder alternativ um eine abschätzbare oder gelernte Aktion oder Reaktion handeln.

Bei den Nutzungsparametern kann es sich um eine Nutzungszeit eines Nutzungsobjekts während eines Tages, um einen Stromverbrauch eines Nutzungsobjekts während eines Tages oder um einen sonstigen Verbrauch des Nutzungsobjekts während eines Tages oder einer vorher festgelegten sonstigen Betriebszeit betragen.

Wird zum Beispiel vom Benutzer eine gewünschte Nutzungszeit und/oder eine gewünschte Anfangsnutzungszeit in der zweiten Rechnereinheit eingestellt und wird aus dieser dann verändert eingestellten Nutzungszeit ein dezimales Bruchverhältnis zu der vorab in der Datenbank hinterlegten Nutzungszeit errechnet, so ergibt sich die entsprechende Treffsicherheit. Liegt dieser Wert unter- oder oberhalb eines Treffsicherheitsschwellwertes, werden die Nutzerdaten zur Ansteuerung durch die dritte Rechnereinheit übermittelt.

In der ersten und/ oder zweiten und/ oder dritten Recheneinheit kann auch ein Treffsicherheitsschwellwertintervall hinterlegt werden, innerhalb dessen oder außerhalb dessen sich die errechnete Treffsicherheit aufhalten muss.

Es kann daher vorgesehen sein, dass erst ab einer derart erfüllten Bedingung durch die erste und/oder die zweite Recheneinheit es ermöglicht wird, dass die jeweiligen Nutzerdaten an die dritte Rechnereinheit zu übermitteln. Die dritte Rechnereinheit ist vorzugsweise diejenige Rechnereinheit, welche das entsprechende Nutzungsobjekt steuert und/ oder regelt.

Gemäß zumindest einer Ausführungsform wird in einem ersten Schritt der Vorrichtung zum nutzerabhängigen Betreiben zumindest eines Datenverarbeitungssystems zumindest eine erste Recheneinheit bereitgestellt, welche auf Basis von in einer Datenbank hinterlegten Nutzerdaten eines Nutzers zumindest ein dem Nutzer eindeutig zugeordnetes Nutzerprofil von Nutzungsobjekten des Nutzers erzeugt.

In einem zweiten Schritt wird eine zweite Rechnereinheit bereitgestellt, welche dem Nutzer zumindest einen Nutzungsvorschlag zur zukünftigen Nutzung eines Nutzungsobjektes macht, wobei der Nutzer den Nutzungsvorschlag bestätigen, verändern und/oder ablehnen kann, und weiter wobei im Falle einer Veränderung und/oder einer Ablehnung des Nutzungsvorschlages durch den Nutzer die zweite Rechnereinheit das Nutzerprofil an dann veränderte Nutzungsdaten anpasst.

In einem dritten Schritt wird eine dritte Rechnereinheit bereitgestellt, welche die dann von der ersten Rechnereinheit übermittelten Nutzerdaten empfängt, wobei die Nutzerdaten Steuerungs- und/ oder Regelungsdaten umfassen, mittels derer zumindest ein Nutzungsobjekt gesteuert und/ oder geregelt wird.

Gemäß zumindest einer Ausführungsform wird von der zweiten und/ oder der dritten Rechnereinheit eine Treffsicherheit errechnet, wobei die Treffsicherheit ein zahlenmäßiges Verhältnis, insbesondere ein dezimaler Bruch, von vorgeschlagenen Nutzungsparametern zu tatsächlich vom Benutzer ausgewählten Nutzungsparametern ist und erst bei einer Unter- und/ oder Überschreitung eines Treffsicherheitsschwellwertes die Nutzerdaten an die dritte Rechnereinheit übermittelt werden.

Denkbar ist auch, dass die erste Rechnereinheit, die zweite Rechnereinheit und/oder die dritte Rechnereinheit in einer einzelnen oder einzigen gemeinsamen Rechnereinheit, beispielsweise einem einzigen integrierten Chip verbaut sind.

Unter System-on-a-chip (SOC, dt. ein Chipsystem und auch System-on-a-chip genannt) versteht man die Integration aller oder eines Teils der Funktionen eines Systems auf einem Chip (DIE), also mit integrierten Schaltkreisen (IC) auf einem Halbleitersubstrat (auch monolithische Integration genannt). Dabei können alle wie obig beschriebenen Rechnereinheiten monolithisch miteinander integriert verbaut werden, sodass diese ein einziges System-on-a-chip bilden.
Ein solcher Chip kann dann die unterschiedlichen Aufgaben der hier beschriebenen Rechnereinheiten wahrnehmen.

Gemäß zumindest einer Ausführungsform sendet und/oder löst bei Unter- und/oder Überschreiten des Schwellwerts, die zweite und/oder dritte Rechnereinheit (2, 3) eine Fehlermeldung und/oder eine Korrekturreaktion an die erste Rechnereinheit (1) aus.

Insbesondere kann eine Fehlermeldung erzeugt werden, wenn die Treffsicherheit um mehr als 10 %, vorzugsweise um mehr als 5 % von dem Treffsicherheitsschwellwert und/ oder dem Treffsicherheitsintervall und dessen Grenzen abweicht.

Gemäß zumindest einer Ausführungsform bilden die Rechnereinheiten ein vollständig unabhängiges und vorzugsweise in sich datentechnisch abgeschlossenes Datensystem derart aus, als dass der Aufbau der Kommunikationsverbindung sowie ein Betreiben der Kommunikationsverbindung zwischen den Rechnereinheiten ausschließlich auf Basis einer Datenkommunikation der Rechnereinheiten untereinander beruht. Hierbei kann ein lokales Kommunikationsnetzwerk erzeugt sein.

Insbesondere kann somit eine Kommunikation der einzelnen Rechnereinheiten untereinander besonders unabhängig aufgebaut und frei von externen Netzwerk- und/oder Interneteinflüssen sein. Eine externe Netzwerkkomponente ist daher zum Beispiel eine solche Komponente, welche dem hier beschriebenen lokalem Netzwerk nicht zugeordnet ist. Die Zuordnung kann dabei über entsprechend IP-Adressierung geschehen.

Mit anderen Worten ist die obig beschriebene Vorrichtung und somit das obig beschriebene Datenverarbeitungssystem vollständig dezentralisiert, so dass eine vollständige Abkopplung des obig beschriebenen Datenverarbeitungssystems von einem übergeordneten Datenverarbeitungssystem (beispielsweise dem Internet) ermöglicht ist, was die private Sicherheit durch die obig beschriebene Entkopplung entsprechend maßgeblich erhöht.

Unter einem lokalen Kommunikationsnetzwerk im Sinne vorliegender Anmeldung kann man ein persönliches Netzwerk (zu engl. Personal Area Network, Abkürzung: PAN) verstehen, das von Kleingeräten wie PDAs oder Mobiltelefonen (zum Beispiel Smartphones) ad hoc auf- und abgebaut werden kann. PANs können daher mittels verschiedener drahtgebundener Übertragungstechniken wie USB oder FireWire oder Ethernet oder auch mittels drahtloser Techniken, wie IrDA, Bluetooth oder WLAN aufgebaut werden (WPAN). PANs können genutzt werden, um mit den Geräten untereinander zu kommunizieren, sie können aber auch dazu dienen, mit einem größeren Netz zu kommunizieren (Uplink). Ein mittels Bluetooth erstelltes PAN nennt man Piconet.

Diese Vorrichtungen steuern dann beispielsweise andere Vorrichtungen wie zum Beispiel Lampen (eine oder viele), Lichtschalter (einen oder viele), Steckdosen (eine oder viele) usw. dadurch
- dass ihnen eine ID (Identifikation) zugeordnet ist oder wird (beispielsweise durch spezifische Eingabe der ID) und Daten zum Authentifizieren mit Peers (andere Vorrichtungen, die die Erfindung enthalten), und/oder
- dass ein Reproduzieren von Daten von Peers (wie basierend auf ID und Authentifizierung zur Verfügung gestellt) durchgeführt wird, und/oder
- die Kontrolle von ausgegebenen Signalen auf Basis dieser Daten durchgeführt wird.

Gemäß zumindest einer Ausführungsform wird mittels eines separaten Eingabeelementes und/oder mittels eines in einem oder mehreren der Rechnereinheiten verbauten Eingabeelementes zumindest ein Datensatz von einer Rechnereinheiten in die jeweils andere Rechnereinheit oder umgekehrt übertragen. Alternativ hierzu kann eine derartige Datenübertragung frei von der separaten Eingabe in ein solches Eingabeelement sein, so dass eine Datenübertragung, beispielsweise nach vorheriger Einstellung, an zumindest einen der Rechnereinheiten vollautomatisch vonstattengehen kann.

Vorstellbar ist in diesem Zusammenhang nämlich, dass ein solches separates Eingabeelement beispielsweise ein Display eines Mobiltelefons oder einen Lichtschalter oder ein sonstiges mechanisches, elektrisches oder elektromechanisches Element sein kann, welches einen Datensatz generiert, der unmittelbar an einen diesem Eingabeelement zugeordneten, vorzugsweise eineindeutig zugeordneten, Rechnereinheit weitergeleitet wird. In einem Computer der Rechnereinheit wird dann dieser von dem separaten Eingabeelement generierte Datensatz in einen solchen Datensatz bzw. ein solches Datenpaket umgewandelt, welches zumindest teilweise in einer HTML Sprache abgefasst ist und zudem die mit dem HTML-basierten Sprachelementen kompatiblen strukturierten Mark-ups (structured markups) enthält. Dieses dann modifizierte Datenpaket wird von einem temporären Speicher der Rechnereinheit wieder an den diesen Computer weitergeleitet, der alsdann dieses modifizierte Datenpaket (HTML Datenpaket) beispielsweise in Form einer Push-Mitteilung an zumindest einen weiteren Datenrechner weiterleitet.

Insbesondere ist denkbar, dass in diesem Zusammenhang eine Kettenreaktion vonstattengeht, so dass diese weitere Rechnereinheit (zum Beispiel die zweite und/oder die dritte Rechnereinheit) dieses, beispielsweise, modifizierte Datenpaket oder durch eine rein beispielhafte weitere Modifizierung dieses weiteren Datenpaktes eben dieses noch weiter modifizierte Datenpaket an einen zusätzlichen Datenrechner (zweiter und/oder dritte Rechnereinheit) oder beliebig weitere Datenrechner, welche das private Kommunikationssystem ausbilden, weitergeleitet wird. Auf einem weiteren separaten Eingabeelement und/oder separaten Ausgabeelement eines der Rechnereinheiten kann daher einer der Datensätze angezeigt werden oder aber mittels dieses zumindest einmal modifizierten Datensatzes ein Ausgabeelement eines Datenrechners, welches verschieden von dem Eingabeelement eines Datenrechners ist, gesteuert oder geregelt werden. Es handelt sich daher bei diesem Datentransport vorzugsweise nicht oder nicht nur um einen Datentransport im Rahmen einer Relaisfunktion. Vorzugsweise werden auf jeder Rechnereinheit die in dieser Rechnereinheit eingespeisten Daten nämlich unter anderem durch Hinzufügung spezifischer Markups verändert, d.h. modifiziert.

Dabei kann es sich bei dem Begriff "Modifikation" entweder um eine teilweise oder vollständigen Veränderung des Datensatzes handeln, beispielsweise im Hinblick auf dessen Datensatzarchitektur, oder "Modifikation" bedeutet lediglich, dass der Datensatz oder die Daten unverändert bleiben und an diesen unveränderten Datensatz durch jeden oder einen der Datenrechner interne Indexe und/oder Context Dateien, beispielsweise zu Identifikationszwecken, angehängt und/oder vorschaltet werden. Insofern ist denkbar, dass die von einem Datenrechner erzeugten HTML-Dateien über das ganze System hinweg identisch bleiben und nur durch die internen Indexe und/oder Context Dateien ergänzt werden können.

Zudem kann ein Zugriff und/oder Zugang von Benutzern besonders einfach im Hinblick auf den Benutzer selbst, den Ort, die Zeit sowie auch generische (beispielsweise extern oder intern gebildete) Daten kontrolliert und überwacht werden.

Darüber hinaus ist es möglich, dass über das obig beschriebene private Datenverarbeitungssystem sehr große Dateien, beispielsweise Videodateien, insbesondere beispielsweise mittels eines E-Mail-Exchange-Programms untereinander ausgetauscht werden können, da dieses keinen Zugang zu dem übergeordneten Internet aufweist.

Auch können Adressbücher von Eingangscontainern, Eingangswiederherstellungsprogrammen, etc. von einem der Datenrechner auf den anderen überspielt werden. Dies wird unter anderem dadurch ermöglicht, dass dabei zumindest einer der Rechner eine zentrale Recheneinheit darstellt, welcher beispielsweise von einem oder mehreren Benutzern dazu ausgewählt ist (beispielsweise über IP-Adressierung), eine zentrale Speichereinheit zu bilden, auf der zumindest ein Teil, vorzugsweise alle Daten, temporär oder dauerhaft hinterlegt sind. Diese Daten werden von dieser zentralen Recheneinheit gespeichert, jedoch auch wieder von dieser zentralen Speichereinheit beispielsweise im Rahmen von Push-Nachrichten an jeweils dezentrale Datenrechner des privaten Datenkommunikationssystems weitergesendet. Möglich ist jedoch anstatt einer Datenübertragung auf Basis von Push-Nachrichten, eine Pull-Nachrichtendatenübertragung.

Gemäß zumindest einer Ausführungsform umfassen die Datenpakete HTML-Datenpakete. Die Kommunikation zwischen den einzelnen Rechnereinheiten und/ oder den Nutzungsobjekten untereinander und den Rechnereinheiten kann daher auf Basis einer HTML-basierten Kommunikationsverbindung geschehen.

In einem weiteren Schritt wird eine HTML-basierte Kommunikationsverbindung zwischen den Datenrechnern aufgebaut, wobei nach Aufbau der Kommunikationsverbindung Daten von einem Datenrechner auf zumindest einen anderen Datenrechner übertragen werden. "HTML-basierte Kommunikationsverbindung" bezeichnet dabei jedwede Kommunikationsverbindung, welche zumindest teilweise nach einem HTML-Standard aufgebaut ist und/oder die Übertragung von solchen Datenpaketen beinhaltet, welche zumindest teilweise in Form eines HTML-Datenpakets aufgebaut sind oder zumindest ein solches zumindest teilweise enthalten.

Dabei definiert und/oder bildet der Begriff "HTML-basiert" gleichzeitig eine Kommunikationslayer im Sinne der Anmeldung aus, innerhalb derer die Datenpakete bewegt werden. Diese so definierte HTML-basierte Kommunikationslayer ist daher ein anwendungsorientierter Layer. Beispielsweise verlassen die in dieser Erfindung dargestellten Datenpakete die durch das HTML-Datenpaket definierten Kommunikationslayer nicht.

Dies kann insbesondere heißen, dass die Kommunikationsverbindung frei von solchen Datenpaketen ist, welche eine im Vergleich zu der obig beschriebenen HMTL-Kommunikationslayer "tiefere" Programmiersprache oder Darstellung im Sinne des OSI-Standards darstellen. Grundsätzlich beruht daher die vorliegende Erfindung auch unter anderem auf dem Konzept, dass das hiermit beschriebene Kommunikationssystem nicht nur eine vorgebbare Auswahl von wohl definierten und von den Benutzer stets selbst einstellbaren Benutzern aufweist, sondern ebenso ein solches Kommunikationssystem ist, welches - nach vorheriger spezifischer IP-Adressierung durch den Benutzer - dann jedoch besonders benutzerfreundlich als tiefste Kommunikationslayer die obig beschriebene HTML-Layer verwendet.

Gemäß zumindest einer Ausführungsform ist zumindest eine, beispielsweise genau eine Rechnereinheit (zentraler Datenrechner) innerhalb des Datenverarbeitungssystems ein Datenspeicher des Datenverarbeitungssystems, wobei vorzugsweise alle Datenpakete von dem Datenrechner (periphere Rechnereinheiten) an diesen Datenrechner gesendet und dann von diesem Datenrechner verwaltet und/ oder gespeichert werden.

Gemäß zumindest einer Ausführungsform wird eine Wiederherstellung von Daten einer peripheren Recheneinheit, also zumindest einer der obig beschriebenen Recheneinheiten, durch Abruf einer der in der zentralen Rechnereinheit (ebenso eine oder mehrere der obig beschriebenen Rechnereinheiten) gespeicherten Daten durchgeführt.

Gemäß zumindest einer Ausführungsform ist eine Rechnereinheit ein insbesondere mobiles Benutzerendgerät, wie zum Beispiel eine Zahnbürste, eine Kaffeemaschine, oder ähnliches.

Gemäß zumindest einer Ausführungsform weist zumindest eine Rechnereinheit zumindest an der Schnittstelle zu einem nicht lokalen Rechnernetzwerk (Internet) auf, sodass eine an das nicht lokale Rechnernetzwerk angeschlossene weitere Rechnereinheit angesteuert wird, um eine weitere Nutzung eines Nutzungsobjekts und/ oder eines weiteren Nutzungsobjekts zu erzeugen. Gemäß zumindest einer Ausführungsform ist zumindest eine Rechnereinheit in Form eines System-on-a-chip ausgebildet.

Im Folgenden wird die Erfindung anhand eines Ausführungsbeispiels und der dazugehörigen Figuren näher beschrieben.

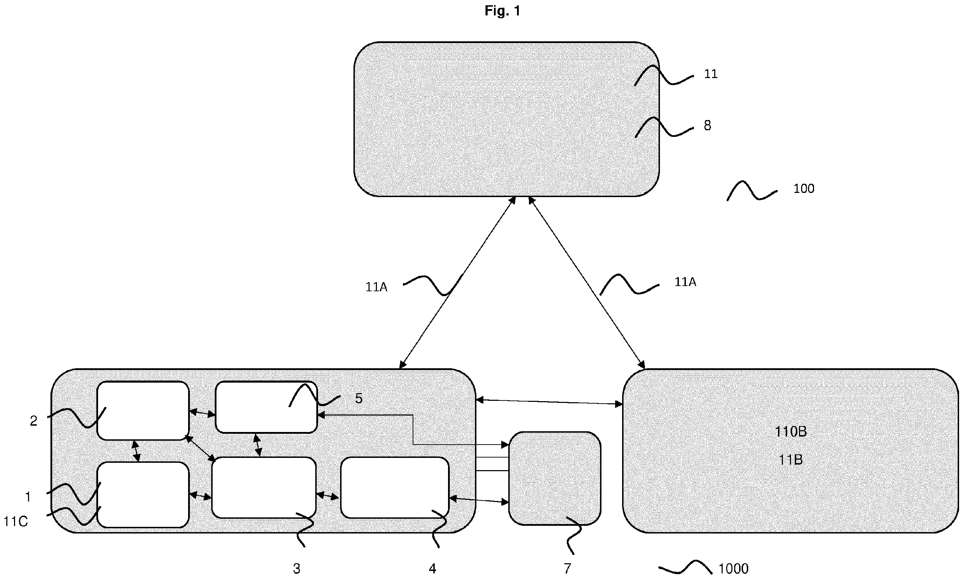

In der Figur 1 ist in einer schematischen Darstellung ein Informationsaustausch innerhalb des Datensystems dargestellt.

In der Figur 1 ist dargestellt, dass die hier beschriebene Vorrichtung 1000 zum nutzerabhängigen Betreiben zumindest eines Datenverarbeitungssystems drei Rechnereinheiten umfasst, welche jeweils mit den Bezugszeichen 1, 2, 3 gekennzeichnet sind.

Insbesondere kann die Rechnereinheit 1 als eine Verhaltensdatenbank dargestellt sein, welche mit der Rechnereinheit 2 in Datenkommunikation steht und das jeweilige Nutzerverhalten speichert. Die Rechnereinheit 2 kann eine Verhaltensanalyse (oder Nutzerverhaltensanalyse) durchführen, wobei die Rechnereinheit 3 die Prognose des Verhaltens durchführen kann.

Die einzelnen Aufgaben können jedoch durch die hier beschriebenen Rechnereinheiten auch getauscht werden. Insbesondere ist dargestellt, dass alle drei Rechnereinheiten untereinander und miteinander in Datenkommunikation zueinander stehen. Dabei kann die Rechnereinheit 1 mit der Rechnereinheit 3 unmittelbar kommunizieren, genauso wie die Rechnereinheit 3 mit der Rechnereinheit 2 wiederum unmittelbar kommunizieren kann, was ebenso für die Rechnerkommunikation zwischen der Rechnereinheit 1 und der Rechnereinheit 2 gilt.

Die Rechnereinheiten 1 bis 3 können auch als ein einziges Datenkommunikationselement in Form eines "Smart Devices" ausgeführt sein. Diese können in einen lokalen Haushalt integriert sein.

Erkennbar ist zudem des Weiteren, dass dieses Smart Device eine Kontrollschnittstelle 4 sowie eine User-ID-Schnittstelle 5 umfasst, sodass die Kontrollschnittstelle 4 sowie die User-ID-Schnittstelle 5 unabhängig voneinander mit dem Userinterface 7 kommunizieren können, um verschiedene externe Nutzungsobjekte und/ oder Rechnereinheiten anschließen zu können.

Zudem sind entsprechende Nutzungsobjekte 110B eines Nutzers um 11B dargestellt. Ein Nutzerprofil ist insbesondere in dem Smart Device, alternativ jedoch auch in dem Nutzungsobjekt hinterlegt. Bei den Nutzungsobjekten kann es sich um Mobiltelefone, Tablets, Notebooks, Wecker, intelligente Zahnbürsten, intelligente Rasierapparate, intelligente Bewegungssensoren, intelligente Matratzen, intelligente TVs und intelligente Mikrofone handeln. Diese Aufzählung ist jedoch nicht abschließend. Die Nutzungsobjekte stehen unmittelbar in Datenkommunikation zu dem Smart Device und damit in unmittelbarer Datenkommunikation zu den Rechnereinheiten 1 bis 3.

Sowohl die Nutzungsobjekte als auch das Smart Device können mit einer internen oder externen Datenbank 8 kommunizieren.

Die Nutzungsobjekte können daher die einzelnen Nutzer, zum Beispiel der Haushaltsnutzer identifizieren. Die Nutzungsobjekte und/ oder die einzelnen Rechner können die einzelnen Nutzungseigenschaften, das heißt die einzelnen Personenvorlieben, auf Basis der individuellen Nutzungswünsche der Zeitpläne, Stimmungen oder anderer Nutzer des Haushalts bestimmen und erlernen.

Die einzelnen Nutzungsobjekte und/ oder die einzelnen Rechnereinheiten 1 bis 3 prognostizieren dann auf Basis der einzelnen Wünsche des Nutzers und der einzelnen Erwartungen des Nutzers basierend auf persönlichen und Umweltfaktoren das einzelne Nutzungsverhalten, welches in der Zukunft voraussichtlich geschehen wird. Basierend auf der Antwort des Nutzers werden einzelne Vorschläge oder Verhaltensmuster des Nutzungsobjekts oder der Nutzung des Nutzungsobjekts vorhergesagt, wobei bei einem Abweichen außerhalb der obig beschriebenen Schwellwerte und/ oder Schwellwertintervalle eine entsprechende Verbesserung und/ oder Korrektur der Nutzungsvorhersage durchgeführt wird.

Die Nutzungsobjekte können dem Nutzer erst nach einer persönlichen Bestätigung oder einer persönlichen Entsperrung nutzbar gemacht werden, insbesondere nämlich auf Basis des erlernten Verhaltens.

Die Kommunikation kann entweder durch ein lokales Gateway gerootet werden oder kann direkt mit zwischen den Nutzungsobjekten und das heißt dem Smart Device und den Nutzungsobjekten durchgeführt werden.

Als ein Beispiel kann der Betrieb einer Kaffeemaschine im Haushalt mit mehreren Personen dargelegt werden.

Das Verhalten der Bewohner (Einstellung des Kaffeeprogramms, wie Sorte, Intensität, etc. sowie Uhrzeiten der Benutzung an unterschiedlichen Tagen) wird in der bereits obig beschriebenen Lernphase aufgenommen (Benutzung der Geräte und Smartsensordaten).

In einer Korrekturphase werden dem Nutzer Vorschläge der Nutzungsobjekte und/ oder des Smartdevices gemacht, was zum Beispiel ein Angebot zum voreingestellten Kaffeeprogramm zu bestimmten Tageszeiten oder Anlässen beinhaltet.

Trifft der Nutzer eine davon abweichende Wahl, wird dies von der zweiten Rechnereinheit zuerst analysiert und mit anderen äußeren Einflüssen (wie zum Beispiel der Tagestemperatur, der Umgebungsluftfeuchtigkeit, Umgebungstemperatur) in Verbindung gebracht.

Abhängig hiervon kann auch die Anwesenheit anderer Personen im Raum oder des Haushalts sein.

In einer Implementationsphase liegt die Treffsicherheit der gemachten Vorschläge vorzugsweise über einer bestimmten Schwelle, die vom Benutzer bestätigt werden kann. Dadurch kann das Smart Device bestimmte Aktionen selbständig steuern, wie zum Beispiel das Gerät von einer bestimmten Uhrzeit einzuschalten, vorzuheizen, Programmvorwahlen zu treffen etc. Dabei werden die Vorschläge vorzugsweise selbstständig vorbereitet und angeboten.

Insbesondere kann vorgesehen sein, dass ein Datenaustausch zwischen den im Haushalt platzierten Smart Devices und den Smart Sensors (Nutzungshöhe) mit intern basierter externer Intelligenz oder Datenbanken unterbunden ist.

Vorzugsweise zum Beispiel ist ein derartiger Datenaustausch nicht möglich. Das Gateway kann der lokalen Datenspeicherung und Steuerung dienen. Damit haben die betroffenen Personen jederzeit die Möglichkeit, diese Datenbank zu überwachen und/ oder zu löschen. Eine Verbindung mit internetbasierten Dienstleistungen, wie zum Beispiel der Bestellung von Verbrauchsmaterialien, wie Lebensmittel, Waschmittel, etc. oder etwa Reparaturdienstleistungen kann durch eine kontrollierte und überwachte Schnittstelle wie obig beschrieben erfolgen.

Die Erfindung ist nicht anhand der Beschreibung und des Ausführungsbeispiels beschränkt. Vielmehr umfasst die Erfindung jedes neue Merkmal sowie jede Kombination von Merkmalen, was auch insbesondere jede Kombination der Patentansprüche beinhaltet, auch wenn dieses Merkmal oder diese Kombination selbst nicht explizit in den Patentansprüchen oder in dem Ausführungsbeispiel offenbart ist.

### Bezugszeichenliste

- 1: Rechnereinheit
- 2: Rechnereinheit
- 3: Rechnereinheit
- 4: Kontrollschnittstelle
- 5: User-ID-Schnittstelle
- 7: Interface
- 8: interne oder externe Datenbank
- 11: Datenbank
- 11A: Nutzerdaten
- 11B: Nutzer
- 11C: Nutzerprofil
- 100: Datenverarbeitungssystem
- 110B: Nutzungsobjekte
- 1000: Vorrichtung

## Patentansprüche

1. Vorrichtung (1000) zum nutzerabhängigen Betreiben zumindest eines Datenverarbeitungssystems (100), aufweisend:
- zumindest eine erste Rechnereinheit (1), welche auf Basis von in einer Datenbank (11) hinterlegten Nutzerdaten (11A) eines Nutzers (11B) zumindest ein dem Nutzer (11B) eindeutig zugeordnetes Nutzerprofil (11C) von Nutzungsobjekten (110B) des Nutzers (11B) erzeugt und/oder abruft,
- eine zweite Rechnereinheit (2), welche dem Nutzer (11B) zumindest einen Nutzungsvorschlag zur zukünftigen Nutzung eines Nutzungsobjektes (110B) macht, wobei der Nutzer (11B) den Nutzungsvorschlag bestätigen, verändern und/oder ablehnt, und weiter wobei im Falle einer Veränderung und/oder einer Ablehnung des Nutzungsvorschlags durch den Nutzer (11B) die zweite Rechnereinheit (2) das Nutzerprofil (11C) an dann veränderte Nutzerdaten anpasst,
- zumindest eine dritten Rechnereinheit (3), welche die dann von der ersten Rechnereinheit (1) übermittelten Nutzerdaten empfängt, wobei die Nutzerdaten Steuerungs- und/oder Regelungsdaten sind mittels derer zumindest ein Nutzungsobjekt (110B) gesteuert und/oder geregelt wird.
**dadurch gekennzeichnet, dass**
von der zweiten und/oder der dritten Rechnereinheit (2, 3) eine Treffsicherheit errechnet wird, wobei die Treffsicherheit ein zahlenmäßiges Verhältnis, insbesondere ein dezimaler Bruch, von vorgeschlagenen Nutzungsparametern zu tatsächlich vom Benutzer ausgewählten Nutzungsparametern ist, und erst ab Unter- oder Überschreitung eines Treffsicherheitsschwellwertes die Nutzerdaten an die dritte Rechnereinheit (3) übermittelt werden,
bei Unter- und/oder Überschreiten des Schwellwerts, die zweite und/oder dritte Rechnereinheit (2, 3) eine Fehlermeldung und/oder eine Korrekturreaktion an die erste Rechnereinheit (1) sendet und/oder auslöst.

2. Vorrichtung (1000) nach Anspruch 1,
**dadurch gekennzeichnet, dass**
alle Rechnereinheiten (1, 2, 3) ein vollständig unabhängiges und, vorzugsweise in sich datentechnisch abgeschlossenes, Datensystem, derart bildet als dass der Aufbau der Kommunikationsverbindung sowie ein Betreiben der Kommunikationsverbindung zwischen den Rechnereinheiten (1, 2, 3) ausschließlich auf Basis einer Datenkommunikation der Rechnereinheiten (1, 2, 3) untereinander beruht.

3. Vorrichtung (1000) nach zumindest einem der vorhergehenden Ansprüche,
**dadurch gekennzeichnet, dass**
alle Datenpakete zum Betreiben und Aufbauen der Kommunikationsverbindung ausschließlich in zumindest einem der Rechnereinheit (1) hinterlegt sind.

4. Vorrichtung (1000) nach dem vorhergehenden Anspruch,
**dadurch gekennzeichnet, dass**
die Datenpakete auf Basis eine E-Mail Exchange System unter den Rechnereinheit (1) ausgetauscht werden.

5. Vorrichtung (1000) nach Anspruch 4,
**dadurch gekennzeichnet, dass**
die Datenpakete HTML-Datenpakte umfassen.

6. Vorrichtung (1000) nach Anspruch 4,
**dadurch gekennzeichnet, dass**
dass zumindest ein, beispielsweise genau eine, Rechnereinheit (1, 2, 3) Rechnereinheit (1) innerhalb des Datenverarbeitungssystems (100) ein Datenspeicher des Datenverarbeitungssystems (100) ist, wobei, vorzugsweise alle, Datenpakete von den Datenrechnern (periphere Rechnereinheiten) (1) an diesen Datenrechner gesendet und dann von diesem Rechnereinheit (1) verwaltet und/oder gespeichert werden.

7. Vorrichtung (1000) nach dem vorhergehenden Ansprüche 5 bis 6,
**dadurch gekennzeichnet, dass**
eine Wiederherstellung von Daten einer peripheren Rechnereinheit (1) durch Abruf der in der zentralen Rechnereinheit (1, 2, 3) gespeicherten Daten durchgeführt wird.

8. Vorrichtung (1000) nach zumindest einem der vorhergehenden Ansprüche,
**dadurch gekennzeichnet, dass**
zumindest eine Rechnereinheit (1, 2, 3) ein, insbesondere mobiles, Benutzerendgerät, wie zum Beispiel eine Zahnbürste oder eine Kaffeemaschine ist oder ein sonstiges Haushaltsgerät ist.

9. Vorrichtung (1000) nach zumindest einem der vorhergehenden Ansprüche,
**dadurch gekennzeichnet, dass**
zumindest eine Rechnereinheit (1, 2, 3) zumindest eine Schnittstelle zu einem nichtlokalen Rechnernetzwerk (Internet) aufweist, sodass zumindest eine an das nichtlokale Rechnernetzwerk angeschlossene weitere Rechnereinheit angesteuert wird, um eine weitere Nutzung eines Nutzungsobjekt und/oder eines weiteren Nutzungsobjekt zu erzeugen.
